# EUROPÄISCHE PATENTSCHRIFT

(11) **EP 2 043 118 B1**
(45) Veröffentlichungstag und Bekanntmachung des Hinweises auf die Patenterteilung: **15.01.2014**
(21) Anmeldenummer: 08014120.3
(22) Anmeldetag: 07.08.2008
(51) Int. Cl.: H02G 3/16, H02G 3/08, H01H 9/02

(54) **Elektrisches/elektronisches Installationsgerät**
Electric/electronic installation device
Appareil d'installation électrique/électronique

(30) Priorität: 25.09.2007 DE 102007045869
(43) Veröffentlichungstag der Anmeldung: 01.04.2009
(73) Patentinhaber: Albrecht Jung GmbH & Co. KG, 58579 Schalksmühle (DE)
(72) Erfinder: Kandt, Richard, 44803 Bochum (DE); Kohlhaas, Johannes, 58579 Schlaksmühle (DE); Ullrich, Konrad, 58339 Breckerfeld (DE); Bonventre, Giancarlo, 58507 Lüdenscheid (DE); Wiesing, Dietmar, 58515 Lüdenscheid (DE); Teichmann, Nicole, 58849 Herscheid (DE); Gebhardt, Marc, 58579 Schalksmühle (DE)

(56) Entgegenhaltungen:
- EP-A2- 0 436 804
- EP-A2- 0 993 171
- DE-C1- 4 009 190

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind in der Regel dafür vorgesehen, eine Vielzahl von in Gebäuden installierte Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden. Oftmals weisen solche elektrischen/elektronischen Installationsgeräte mehrere Betätigungstasten zur bedarfsgerechten Beeinflussung der angeschlossenen Aktoren auf und sind zur Montage an eine Wand vorgesehen. Zum notwendigen Anschluss der zugehörigen elektrischen Leitungen sind solche elektrischen/elektronischen Installationsgeräte oftmals mit einer Anschlusseinrichtung ausgerüstet.

Sind derartige elektrische/elektronische Installationsgeräte z. B. als Türkommunikationsgeräte ausgeführt, so sind diese in der Regel dafür vorgesehen, bei Bedarf eine Kommunikationsmöglichkeit zwischen einem Wohnungsinhaber und einem Besucher zu schaffen. Oftmals weist ein solches elektrisches/elektronisches Installationsgerät mehrere Betätigungstasten (Klingeltasten) auf, damit sich der Besucher beim ausgewählten Wohnungsinhaber bemerkbar machen kann. Außerdem sind solche elektrischen/elektronischen Türkommunikationsgeräte oftmals mit einer Lautsprechereinheit und einem Mikrophon versehen, damit der Wohnungsinhaber mit dem Besucher sprechen kann und danach entscheidet, ob diesem Einlass gewährt wird. Zu diesem Zweck sind solche elektrischen/elektronischen Türkommunikationsgeräte mit einer Öffnungstaste versehen. Vielfach sind solche elektrischen/elektronischen Türkommunikationsgeräte auch mit einer Funktionstaste ausgerüstet, um z. B. die Beleuchtungsanlage im Flur einschalten zu können. Auch solche elektrischen/elektronischen Türkommunikationsgeräte sind zur Montage an eine Wand vorgesehen und müssen an die zur Funktion notwenigen elektrischen Leitungen angeschlossen werden. Oftmals ist die Anschlussmontage schwierig, weil beengte Raumverhältnisse vorliegen und/oder die elektrischen Leitungen nur unter Schwierigkeiten mit der Anschlusseinrichtung eines solchen Türkommunikationsgerätes verbunden werden können. Durch die EP 0 993 171 A2 und die DE 196 14 066 C1 sind z. B. entsprechende Türkommunikationsgeräte bekannt geworden.

Durch die DE 100 11 615 C2 ist ein dem Oberbegriff des Hauptanspruches entsprechendes, als Station einer Türanlage ausgebildetes elektrisches/elektronisches Installationsgerät der Gebäudesystemtechnik bekannt geworden. Dieses elektrische/elektronische Installationsgerät weist ein Gehäuse zur Aufnahme mehrerer Funktionsmodule, nämlich einem Kameramodul, einem Lautsprechermodul und einer Klingeltaste auf. Das Gehäuse besteht aus einem Unterputzgehäuse als Sockelteil und einem Montagerahmen mit Abdeckung als Deckelteil. Im Sockelteil ist eine Durchtrittsöffnung zum Durchtritt der zum Anschluss notwendigen Kabel vorgesehen, sowie ein Anschlussblock befestigt. Bei solchermaßen ausgebildeten elektrischen/elektronischen Installationsgeräten ist die Anschlussmontage bei beengten Platzverhältnissen und/oder kurz gehaltenen elektrischen Leitungen oftmals jedoch erheblich erschwert.

Des weiteren ist durch die DE 10 2004 043 649 B4 ein elektrisches/elektronisches Installationsgerät vorgesehen für die Gebäudesystemtechnik bekannt geworden, welches ein Gehäuse zur Aufnahme mehrerer Funktionseinheiten aufweist, wobei das Gehäuse ein zur Aufnahme zumindest einer Funktionseinheit vorgesehenes Sockelteil und zumindest ein zur Halterung von Betätigungstasten vorgesehenes Deckelteil aufweist. Üblicherweise sind diese elektrischen/elektronischen Installationsgeräte mit einer ortsfest an deren Funktionseinheit angebrachten Anschlusseinrichtung zum Anschluss der zur Funktion notwendigen elektrischen Leitungen versehen, was die Anschlussmontage bei beengten Platzverhältnissen und/oder kurz gehaltenen elektrischen Leitungen oftmals erheblich erschwert.

Außerdem ist durch die EP 0 436 804 A2 eine elektrische Installationseinheit für die Hausleittechnik bekannt geworden. Diese Installationseinheit enthält in einem Gehäuse, das in einer Installationsdose untergebracht werden kann, eine Schnittstelle, die mit einer Datenbusleitung verbunden wird. Für den Anschluss der Datenbusleitung dient eine Anschlussvorrichtung aus einem Block, der über Kontaktelemente mit dem Gehäuse verbindbar ist und der Anschlusselemente für den Anschluss der ankommenden Datenbusleitung sowie für den Anschluss mehrerer Datenbusleitungen aufweist. Wenn die Schnittstelle ausgewechselt werden muss, kann die Anschlussvorrichtung vom Gehäuse getrennt werden und das Gehäuse kann entfernt werden, ohne dass die Datenbusverbindung zu den anderen Schnittstellen unterbrochen wird.

Des Weiteren ist durch die DE 40 09 190 C1 ein Modulsystem für eine Türanlage, insbesondere eine Türsprechanlage bekannt geworden. Das Modulsystem enthält als Grundlage im Raster aneinanderreihbare Unterputz- oder Aufputzdosen, die mittels eines zusammengesetzten Anschlussrahmens und Befestigungsrahmens mit aneinandergereihten Aufnahmen für Moduleinsätze abdeckbar und mit diesen verbunden sind, wobei die Moduleinsätze in die Aufnahmerahmen einsetzbar und darin festlegbar sind.

Der vorliegenden Erfindung liegt deshalb die Aufgabe zugrunde, ein elektrisches/elektronisches Installationsgerät zu schaffen, welches sich auch bei schwierigen Bedingungen, wie z. B. beengte Platzverhältnisse, kurzgehaltene elektrische Leitungen sowohl bei einer Montage direkt an eine Wand und/oder an eine in eine Wand eingebaute Installationsdose komfortable und einfach an die zur Funktion notwendigen elektrischen Leitungen anschließen lässt.

Diese Aufgabe wird durch die im Hauptanspruch angegebenen Merkmale gelöst.

Bei einem solchermaßen ausgebildeten elektrischen/elektronischen Installationsgerät ist besonders vorteilhaft, dass je nach vorliegenden Montagebedingungen verschiedenen Anschlussvarianten ausgewählt werden können, weil der Anschlussblock z. B. zuerst an die elektrischen Leitungen angeschlossen werden kann und danach am Sockelteil festgelegt wird oder aber der Anschlussblock z. B. zunächst zusammen mit dem Sockelteil an der Wand befestigt wird und erst dann die elektrischen Leitungen angeschlossen werden.

Des weiteren ist besonders vorteilhaft, dass aufgrund einfacher Ausgestaltungsmerkmale von Sockelteil und/oder Deckelteil auch bei einem Türkommunikationsgeräte die Möglichkeit besteht, Abdeckrahmen von bereits bestehenden Produktprogrammen elektrischer/elektronischer Installationsgeräte zu verwenden, die klassisch der Gebäudesystemtechnik zuzurechnen sind. Auf kostengünstige Art und Weise ist somit eine designerische Integration von Türkommunikationsgeräten in das bestehende Produktprogramm elektrischer/elektronischer Installationsgeräte der Gebäudesystemtechnik möglich.

Weitere vorteilhafte Ausgestaltungen sind in den Unteransprüchen angegeben. Anhand zweier in den Zeichnungen näher dargestellter Ausführungsbeispiele sei der erfindungsgemäße Gegenstand näher erläutert. Dabei zeigen:
- Fig. 1:: prinziphaft das Sockelteil eines elektrischen/elektronischen Installationsgerätes mit zugeordnetem Anschlussblock gemäß ersten Ausführungsbeispiel in räumlicher Darstellung;
- Fig. 2:: prinziphaft das Sockelteil gemäß Figur 1, mit zugeordnetem Abdeckrahmen in räumlicher Darstellung;
- Fig. 3:: prinziphaft eine Unteransicht eines solchen elektrischen/elektronischen Installationsgerätes gemäß ersten Ausführungsbeispiel mit Sockelteil, Deckelteil und Anschlussblock;
- Fig. 4:: prinziphaft ein elektrisches/elektronisches Installationsgerätes gemäß ersten Ausführungsbeispiel in Draufsicht mit Abdeckrahmen in räumlicher Darstellung;
- Fig. 5:: prinziphaft das Sockelteil eines elektrischen/elektronischen Installationsgerätes gemäß zweiten Ausführungsbeispiel mit zugeordnetem Anschlussblock in räumlicher Darstellung;
- Fig. 6:: prinziphaft ein elektrisches/elektronisches Installationsgerätes gemäß zweitem Ausführungsbeispiel in Draufsicht in räumlicher Darstellung.

Wie aus den Zeichnungen hervorgeht, weist ein solches elektrisches/elektronisches Installationsgerät ein Gehäuse auf, dessen Sockelteil 1 zur Aufnahme zumindest einer Funktionseinheit 2 vorgesehen ist. Das Deckelteil 3 des Gehäuses ist zumindest zur Anordnung und Aufnahme mehrerer Betätigungstasten 4 vorgesehen.

Wie des weiteren aus den Figuren hervorgeht, ist an das Sockelteil 1 ein Aufnahmerahmen 5 einstückig angeformt, der zur haltenden Aufnahme eines Anschlussblockes 6 vorgesehen ist. An den Aufnahmerahmen 5 ist an zwei gegenüberliegenden inneren Seitenwandungen jeweils eine Feder 7 angeformt, welche jeweils in eine entsprechend ausgebildete Nut 8 des Anschlussblockes 6 eingreift. Direkt im Bereich des Aufnahmerahmens 5 ist in die Rückwand des Sockelteils 1 eine Durchführöffnung 9 für den Durchtritt der zum Anschluss notwendigen -der Einfachheit halber nicht dargestellten- elektrischen Leitungen, vorhanden. Die Durchtrittsöffnung 9 weist dabei derartige Abmessungen auf, so dass auch der Durchtritt des Anschlussblockes 6 problemlos möglich ist, wenn dieser z. B. vorab bereits mit den elektrischen Leitungen verbunden wurde. Der Anschlussblock 6 kann somit samt der angeschlossenen Leitungen durch die Durchtrittsöffnung 9 des Sockelteils 1 hindurchgeführt werden, bevor dieses an einer Wand bzw. an einer in eine Wand eingebauten Installationsdose festgelegt wird. Genauso gut ist es aber möglich, zunächst das Sockelteil 1 an einer Wand bzw. an einer in eine Wand eingebauten Installationsdose festzulegen und dann den Anschluss der elektrischen Leitungen am Anschlussblock vorzunehmen. Anschließend kann der Anschlussblock 6 problemlos mit den daran angeschlossenen elektrischen Leitungen am Aufnahmerahmen 5 des Sockelteils 1 positionssicher festgelegt werden. Der Anschlussblock 6 braucht dazu lediglich mit seinen beiden eingeformten Nuten 8 auf die beiden am Anschlussrahmen 5 befindlichen Federn 7 aufgeschoben werden.

Wie des weiteren aus den Zeichnungen hervorgeht, ist der Anschlussblock 6 mit vier Kontaktbuchsen 11 bestückt, in die jeweils ein Kontaktstift 12 eingreift, welcher an eine in das Sockelteil 1 eingesetzte Leiterplatte 13 angebracht ist. Zu diesem Zweck sind vier Kontaktstifte 12 in die Leiterplatte 13 eingesetzt. Außerdem ist der Anschlussblock 6 mit vier Anschlussklemmen 14 versehen, um einen einfachen Anschluss der zur Funktion notwendigen elektrischen Leitungen zu ermöglichen. Zur lagegerechten Befestigung an einer Wand und/oder an eine in eine Wand eingebaute Installationsdose sind in das Sockelteil 1 mehrere Befestigungsschlitze 16 eingeformt. Die Befestigungsschlitze 16 sind dabei derart angeordnet und ausgeführt, so dass eine einfache lagegerechte Ausrichtung des elektrischen/elektronischen Installationsgerätes schon bei der Montage möglich ist. Außerdem sind an das Sockelteil 1 zwei Rasthaken 17 angeformt, damit das zugehörige Deckelteil 3 auf einfache Art und Weise sicher am Sockelteil 1 festgelegt werden kann.

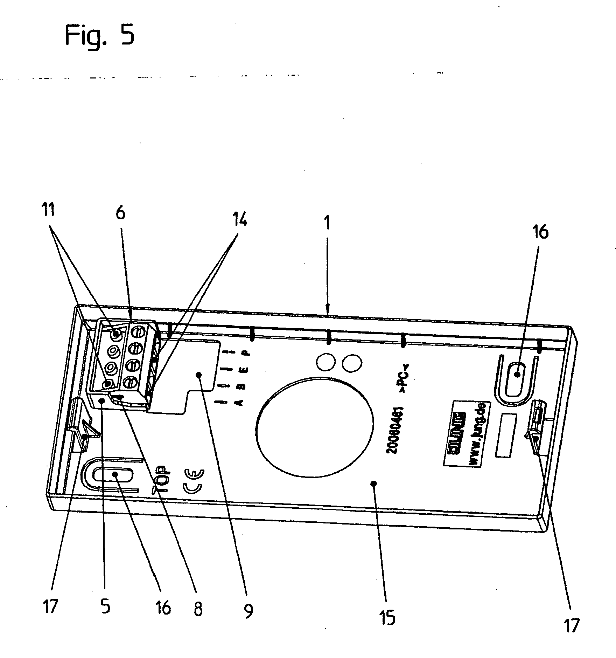

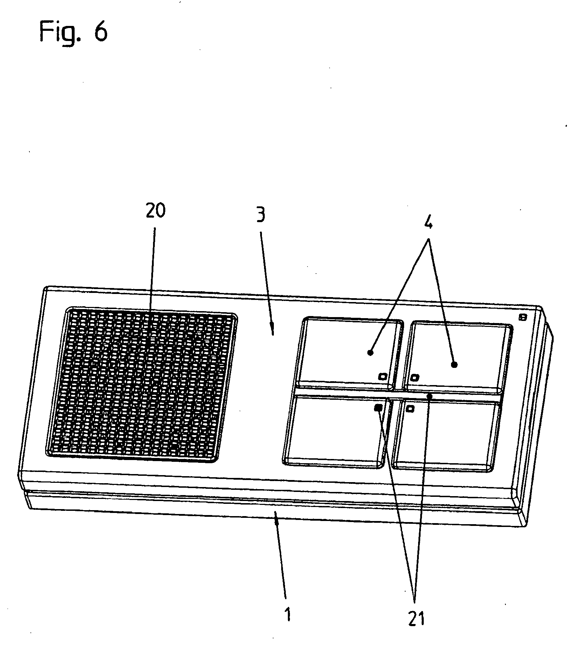

Wie insbesondere aus Figur 5 und 6 hervorgeht, ist das dargestellte Sockelteil 1 zur Aufnahme einer einzigen Funktionseinheit 2 vorgesehen und weist deshalb lediglich eine einzige Aufnahmekammer 15 auf. Auch ist das Sockelteil 1 bzw. das Deckelteil 3 derart ausgeführt, dass das als Türkommunikationsgerät ausgeführte elektrische/elektronische Installationsgerät ohne die Verwendung eines Abdeckrahmens auf eine Wand montiert wird.

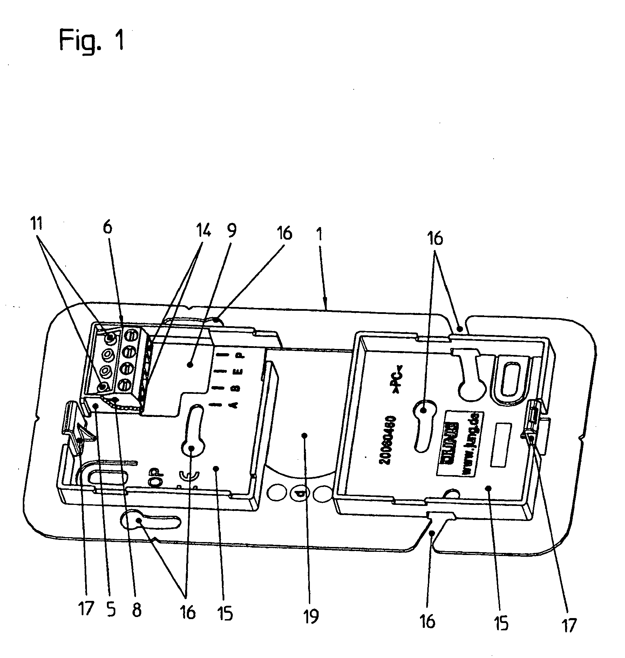

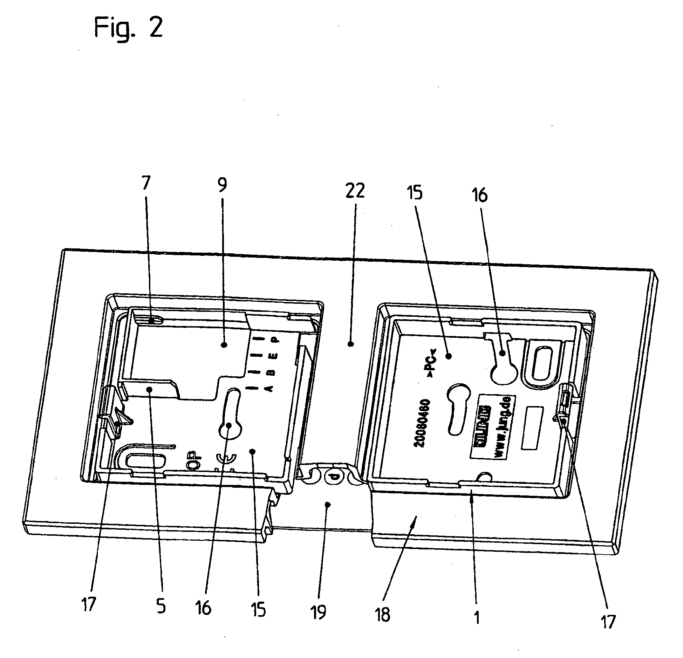

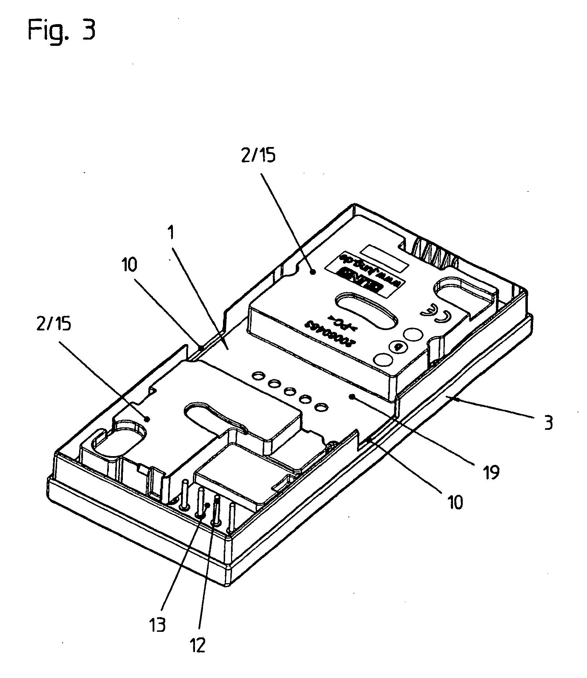

Wie insbesondere aus Figur 1, 2 und 3 hervorgeht, ist das dargestellte Sockelteil 1 zur Aufnahme von zwei Funktionseinheiten 2 vorgesehen und weist deshalb auch zwei separate Aufnahmekammern 15 auf. Bei diesem elektrischen/elektronischen Installationsgerät ist das Sockelteil 1 zur Kombination mit einem Abdeckrahmen 18 mit entsprechenden Haltebereichen 19 versehen, und das Deckelteil 3 weist entsprechend ausgeführte Halteausnehmungen 10 auf. Somit ist es aufgrund einfacher Ausgestaltungsmerkmale von Sockelteil 1 und Deckelteil 3 auch bei einem Türkommunikationsgeräte möglich, Abdeckrahmen 18 von bereits bestehenden Produktprogrammen elektrischer/elektronischer Installationsgeräte zu verwenden, die klassisch der Gebäudesystemtechnik zuzurechnen sind. Auf kostengünstige Art und Weise ist somit eine designerische Integration von Türkommunikationsgeräten in das bestehende Produktprogramm elektrischer/elektronischer Installationsgeräte der Gebäudesystemtechnik möglich. Dabei ist auch die Verwendung eines Abdeckrahmens 18 möglich, der einen Trennsteg 22 zwischen den Installationsbereichen von zwei elektrischen/elektronischen Installationsgeräten aufweist.

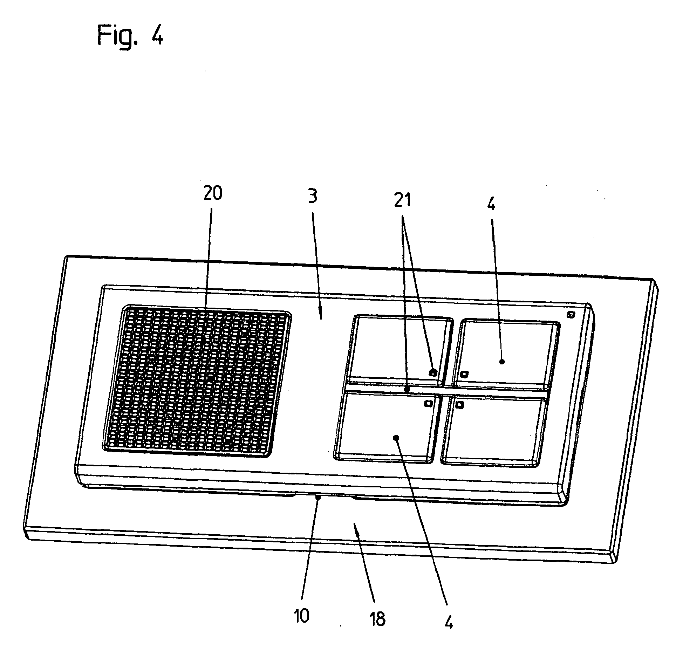

Wie insbesondere aus Figur 4 und 6 hervorgeht, weist ein solches elektrisches/elektronisches Installationsgerät erstens einen ersten Funktionsbereich auf, welcher als Lautsprecher-/Mikrophoneinheit 20 ausgeführt ist und zweitens einen zweiten Funktionsbereich auf, welcher zur Aufnahme von vier Betätigungstasten 4 vorgesehen ist. Zur Realisierung einer funktionsgerechten bzw. optisch ansprechenden Beleuchtung sind den Betätigungstasten 4 Lichtleitelemente 21 zugeordnet, in welche über auf der Leiterplatte befindliche Leuchtmittel Licht eingespeist wird.

## Patentansprüche

1. Elektrisches/elektronisches Installationsgerät mit einem Gehäuse zur Aufnahme mehrerer Funktionseinheiten, wobei das Gehäuse ein zur Aufnahme zumindest einer Funktionseinheit vorgesehenes Sockelteil und zumindest ein zur Halterung von Betätigungstasten vorgesehenes Deckelteil aufweist, wobei das Sockelteil zur Aufnahme zumindest eines Anschlussblockes vorgesehen ist und eine Durchtrittsöffnung für die zum Anschluss notwendigen elektrischen Leitungen aufweist, **dadurch gekennzeichnet, dass** das Sockelteil (1) mit zumindest einem Aufnahmerahmen (5) versehen ist, welcher zur positionsgerechten Aufnahme eines Anschlussblockes (6) zwei angeformte Federn (7) aufweist, welche in entsprechend ausgebildete Nuten (8) des Anschlussblockes (6) eingreifen, und dass die im Sockelteil (1) vorhandene, zum Durchtritt der zum Anschluss notwendigen elektrischen Leitungen und zum Durchtritt des Anschlussblockes (6) vorgesehene Durchtrittsöffnung (9) in der Rückwand im Bereich des Aufnahmerahmens (5) vorhanden und entsprechend groß dimensioniert ist.

2. Elektrisches/elektronisches Installationsgerät nach Anspruch 1, **dadurch gekennzeichnet, dass** der Anschlussblock (6) mit mehreren Kontaktbuchsen (11) bestückt ist, in die jeweils ein Kontaktstift (12) eingreift, welcher jeweils an eine in das Sockelteil (1) eingesetzte Leiterplatte (13) angebracht ist, und dass der Anschlussblock (6) mit mehreren zum Anschluss von elektrischen Leitungen vorgesehenen Anschlussklemmen (14) bestückt ist.

3. Elektrisches/elektronisches Installationsgerät nach Anspruch 1 oder 2, **dadurch gekennzeichnet, dass** das Sockelteil (1) zur Aufnahme von Funktionseinheiten (2) zumindest eine Ausnahmekammer (15) aufweist.

4. Elektrisches/elektronisches Installationsgerät nach einem der Ansprüche 1 bis 3, **dadurch gekennzeichnet, dass** das Sockelteil (1) zur Aufnahme mehrerer Funktionseinheiten (2) zumindest zwei separate Aufnahmekammern (15) aufweist.

5. Elektrisches/elektronisches Installationsgerät nach einem der Ansprüche 1 bis 4, **dadurch gekennzeichnet, dass** in das Sockelteil (1) mehrere zur lagegerechten Befestigung vorgesehene Befestigungsschlitze (16) eingeformt sind.

6. Elektrisches/elektronisches Installationsgerät nach einem der Ansprüche 1 bis 5, **dadurch gekennzeichnet, dass** das Sockelteil (1) zumindest einen Rasthaken (17) zur Festlegung eines zugehörigen Deckelteils (3) aufweist.

7. Elektrisches/elektronisches Installationsgerät nach einem der Ansprüche 1 bis 6, **dadurch gekennzeichnet, dass** das Sockelteil (1) und/oder das Deckelteil (3) zur Kombination mit einem Abdeckrahmen (18) entsprechend ausgebildete Haltebereiche (19) und/oder Halteausnehmungen (10) aufweist.

8. Elektrisches/elektronisches Installationsgerät nach einem der Ansprüche 1 bis 7, **dadurch gekennzeichnet, dass** an das Sockelteil (1) und an zumindest eine Funktionseinheit (2) miteinander in Wirkverbindung kommende Rastelemente angeformt sind.

## Claims

1. Electrical/electronic installation device having a housing for accommodating a plurality of functional units, the housing having a base constituent provided for accommodating at least one functional unit and at least one cover constituent provided for mounting actuating keys, whereby the base constituent is provided for accommodating at least one terminal block and has an opening for the electric wires needed for terminating purposes, **characterised in that** the base constituent (1) is provided with at least one retention frame (5) having two integrated springs (7) which are intended for retaining a terminal block (6) in the correct position and which engage in correspondingly designed grooves (8) in the terminal block (6), and that the opening (9) provided in the base constituent (1) for the passage of the electric wires needed for termination and for the passage of the terminal block (6), is located in the rear wall in the vicinity of the retention frame (5) and is of correspondingly large dimensions.

2. Electrical/electronic installation device according to Claim 1, **characterised in that** the terminal block (6) is equipped with a plurality of female contacts (11) into each of which a contact pin (12) engages, each of these being mounted on a printed circuit board (13) inserted into the base constituent (1), and that the terminal block (6) is equipped with a plurality of terminal clips (14) provided for terminating electric wires.

3. Electrical/electronic installation device according to Claim 1 or Claim 2, **characterised in that** the base constituent (1) has at least one receiving cavity (15) for the purpose of accommodating functional units (2).

4. Electrical/electronic installation device according to any of Claims 1 to 3, **characterised in that** the base constituent (1) has at least two separate receiving cavities (15) for accommodating a plurality of functional units (2).

5. Electrical/electronic installation device according to any of Claims 1 to 4, **characterised in that** a plurality of fastening slots (16) are moulded into the base constituent (1) provided for ensuring correctly positioned fixation.

6. Electrical/electronic installation device according to any of Claims 1 to 5, **characterised in that** the base constituent (1) has at least one locking hook (17) for the purpose of locating a corresponding cover constituent (3).

7. Electrical/electronic installation device according to any of Claims 1 to 6, **characterised in that** the base constituent (1) and/or the cover constituent (3) has appropriately designed retention zones (19) and/or retention recesses (10) for combination with a cover frame (18).

8. Electrical/electronic installation device according to any of Claims 1 to 7, **characterised in that** latching elements that form an operative connection with each other are moulded onto the base constituent (1) and onto at least one functional unit (2).

## Revendications

1. Appareil d'installation électrique/électronique avec un boîtier destiné à loger plusieurs unités fonctionnelles, le boîtier présentant une partie de socle prévue pour loger au moins une unité fonctionnelle et au moins une partie de couvercle prévue pour supporter des touches d'actionnement, ce faisant la partie de socle est destinée à recevoir au moins un bloc de connexion et présente une ouverture de passage pour les câbles électriques nécessaires au raccordement, **caractérisé en ce que** la partie de socle (1) est dotée d'au moins un cadre de réception (5) qui présente deux ressorts (7) assurant le logement en position d'un bloc de connexion (6) qui se prennent dans des rainures (8) formées en conséquence du bloc de connexion (6), et **en ce qu'**il existe l'ouverture de passage (9) existant dans la partie de socle (1), prévue pour le passage des câbles électriques nécessaires et pour le passage du bloc de connexion (6) dans la paroi arrière dans la zone du cadre de réception (5) et qu'elle est de dimensions suffisantes.

2. Appareil d'installation électrique/électronique selon revendication 1 **caractérisé en ce que** le bloc de connexion (6) est équipé de plusieurs douilles de contact (11) dans lesquelles se prend respectivement une fiche de contact (12) qui est respectivement montée sur une carte imprimée (13) insérée dans la partie de socle (1) et que le bloc de connexion (6) est équipé de plusieurs bornes de raccordement (14) prévues pour le raccordement de câbles électriques.

3. Appareil d'installation électrique/électronique selon revendication 1 ou 2 **caractérisé en ce que** la partie de socle (1) prévue pour loger des unités fonctionnelles (2) présente au moins une chambre de réception (15).

4. Appareil d'installation électrique/électronique selon l'une des revendications 1 à 3 **caractérisé en ce que** la partie de socle (1) prévue pour loger plusieurs unités fonctionnelles (2) présente au moins deux chambres de réception (15).

5. Appareil d'installation électrique/électronique selon l'une des revendications 1 à 4 **caractérisé en ce que** dans la partie de socle (1) sont formées plusieurs fentes de fixation (16) prévues pour la fixation dans la bonne position.

6. Appareil d'installation électrique/électronique selon l'une des revendications 1 à 5 **caractérisé en ce que** la partie de socle (1) présente au moins un crochet à cliquet (17) pour le blocage d'une partie de couvercle (3) correspondante.

7. Appareil d'installation électrique/électronique selon l'une des revendications 1 à 6 **caractérisé en ce que** la partie de socle (1) et/ou la partie de couvercle (3) présente des zones de retenue (19) et/ou des évidements de retenue (10) formés en conséquence pour la combinaison avec un cadre de recouvrement (18).

8. Appareil d'installation électrique/électronique selon l'une des revendications 1 à 7 **caractérisé en ce que** sur la partie de socle (1) et sur au moins une unité fonctionnelle (2) sont formés des éléments d'encliquetage en interaction.
